# EUROPEAN PATENT SPECIFICATION

(11) **EP 4 373 734 B1**
(45) Date of publication and mention of the grant of the patent: **05.08.2026**
(21) Application number: 22735427.1
(22) Date of filing: 27.06.2022
(51) Int. Cl.: B63B 27/10, B63B 35/00, B66C 23/18, E02D 13/04, E02B 17/00

(54) **A VESSEL AND METHOD CONFIGURED TO INSTALL A FOUNDATION STRUCTURE**
SCHIFF UND VERFAHREN ZUR INSTALLATION EINER FUNDAMENTSTRUKTUR
NAVIRE ET PROCÉDÉ CONÇUS POUR INSTALLER UNE STRUCTURE DE FONDATION

(30) Priority: 19.07.2021 DK PA202170385
(43) Date of publication of application: 29.05.2024
(73) Proprietor: Ulstein Design & Solutions B.V., 3045 AP Rotterdam (NL)
(72) Inventor: STROO, Jacobus Dingeman, 2613 JT Delft (NL)
(74) Representative: Plougmann Vingtoft a/s
(86) International application number: PCT/EP2022/067523
(87) International publication number: WO 2023/001493

(56) References cited:
- WO-A1-2018/117846
- WO-A1-2021/008529
- WO-A1-2022/229436
- WO-A2-2011/108938
- CN-B- 103 979 081
- JP-A- 2014 227 765
- US-B1- 7 112 010

## Description

### FIELD OF THE INVENTION

The present invention relates to a vessel and a method configured to install a foundation structure, such as a monopile, at a position at sea, the position may be a foundation extending from the seabed or may be a position in or on the seabed, the foundation structure comprising an elongate element.

CN 103 979 081 B, WO2018/117846A1, WO2021/008529A1, JP 2014 227765 A, WO2011/108938A2, US 7 112 010 B1, and WO2022/229436A1 disclose vessel constructions for installing a foundation structure at a position at sea.

### SUMMARY OF THE INVENTION

The invention relates in a first aspect to a vessel configured to install a foundation structure as defined in claim 1.

The invention relates in a second aspect to a method of installing a foundation structure as defined in clam 14

### BRIEF DESCRIPTION OF THE FIGURES

The present invention and in particular preferred embodiments thereof will now be disclosed in more details with reference to the accompanying figures. The figures show ways of implementing the present invention and are not to be construed as being limiting to other possible embodiments falling within the scope of the attached claim set.

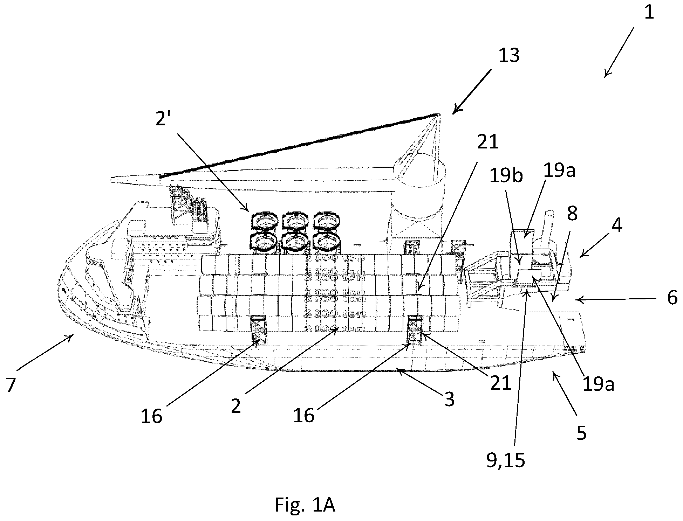

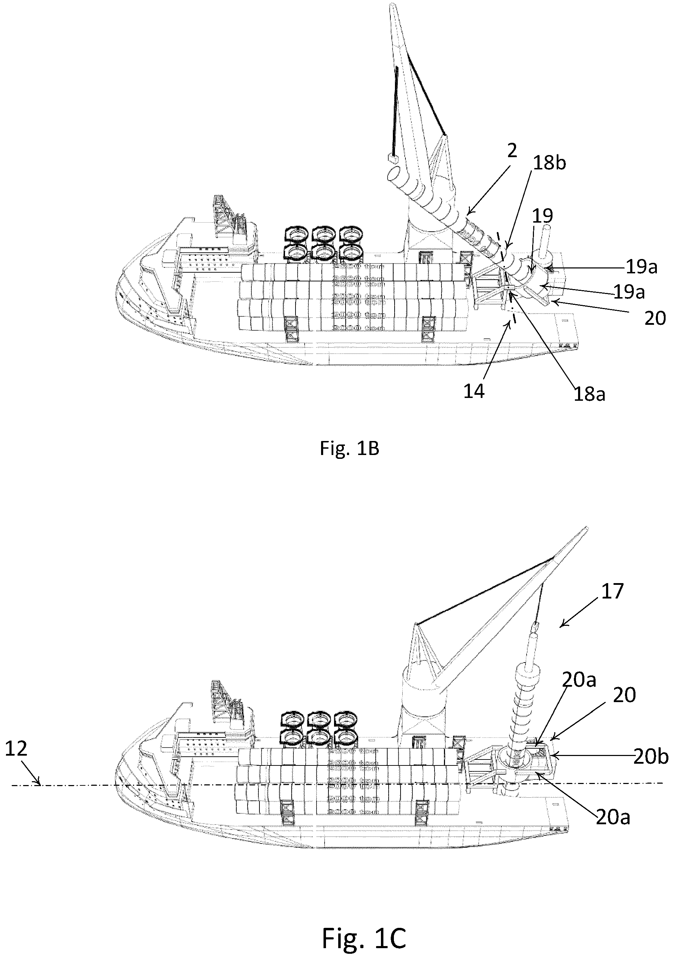

Figure 1 shows a first embodiment according to the invention; fig. 1A shows the vessel without a foundation structure arranged in the upending device, and figs. 1B and 1C show the vessel with a foundation structure arranged in the upending device at two positions where fig. 1C illustrates the upending device in the position where the foundation structure is vertical ready for being installed;

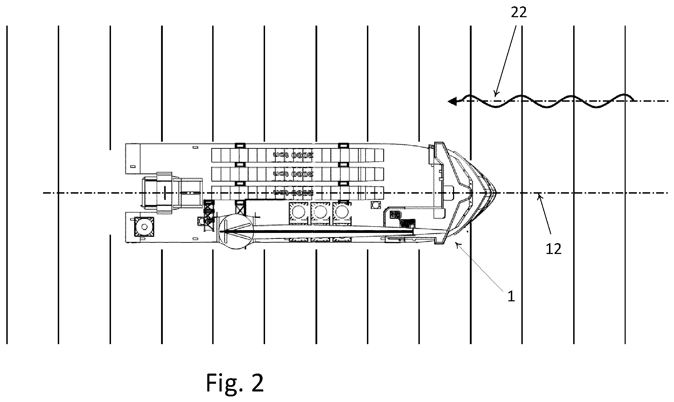

Figure 2 shows schematically a vessel in a designated location for installation of a foundation structure and where the vessel is maintained in a preferred orientation relatively a wave propagation direction;

### DETAILED DESCRIPTION OF PREFERRED EMBODIMENTS

Reference is made to the figures and in particular fig. 1 showing a vessel 1 being configured to install a foundation structure 2. The vessel may also be referred to as a ship. The foundation structure may be a monopile but the invention is not limited to such monopiles. The position at which the foundation structure 2 is to be positioned is a position at sea and that position may be a foundation extending from the seabed or may be a position in or on the seabed. As illustrated, the foundation structure 2 comprising an elongate element, typically a tubular element.

As illustrated, the vessel comprises a hull 3 having stern 4 at the aft 5 of the vessel 1. The stern is provided with a recess 6 extending from the stern and towards a bow 7 of the vessel 1. As illustrated the recess provides an opening in the stern as well as opening 8 going through the hull 3. Thereby, sea access from a deck position is provided.

The vessel is equipped with one or more propulsion devices to manoeuvre the vessel between different locations and dynamically maintain the vessel in a designated location for installation of a foundation structure 2. The propulsion devices may be one or more thrusters such as an azimuth thruster, a bow thruster and/or an inboard engine connected to a propeller. Maintaining the vessel in the designated location may be fully or partly automated based on position reference sensors. Such sensors may include one or more of GPS, laser radius, subsea acoustics, taut wire positioning systems and the like. For a taut wire positioning system a clump weight is lowered to the seabed connected with a taut wire and a sensor is used to measure the angle of the taut wire to calculate the position. In such embodiments, a controller receives position coordinates and operates the one or more propulsion devices to manoeuvre so as to maintain the designated position.

Maintaining of the vessel in the designated position may also be obtained passively by anchoring the vessel to the seabed at the designated position. A combination of dynamically and passively maintaining the vessel at the designated position is also considered within the scope of the present invention.

During installation of a foundation structure at the designated position, the vessel is preferably orientated at an orientation selected between an orientation where the bow is substantially facing incoming waves head-on and an orientation where the centre line of the vessel being substantially parallel with the wave propagation direction of the waves. In preferred embodiments, the vessel is positioned with its bow facing incoming waves and in other embodiments, the vessel is positioned with the centre line being parallel with the wave propagation direction of the waves with one of the vessel's side facing incoming waves. By this, the possibility of waves moving into the recess 6 is greatly reduced providing calm water inside the recess, whereby the recess 6 provides a shelter from waves being beneficial during installation of a foundation structure.

In fig. 2 a vessel is schematically illustrated in a designated location for installation of a foundation structure and where the vessel is maintained in a preferred orientation relatively a wave propagation direction 22. In fig. 2 vertical equally spaced apart lines represent tops of waves as indicated in the upper right corner of fig. 2 where the wavy line represents a wave. In the embodiment shown in fig. 2, the vessel is orientated with each bow facing incoming waves, and with the centre line parallel with the wave propagation direction 22.

The vessel also comprising an upending device 9 arranged at the recess 6 and the upending device 9 is configured to upend a foundation structure. More detailed, the upending device is configured to receive at least a section of said foundation structure 2 being positioned substantially horizontally and axially aligned with a center line 12 of the vessel (see fig. 1A). The upending device 9 being further configured to rotate about a horizontal rotational axis 14 (see fig. 1B) being substantially perpendicular to the center line 12 of the vessel so that upon rotating, said end of the foundation structure is positioned in the recess 6 and with the foundation structure 2 in an upright position. It is to be noted that orientation such as horizontal, vertical or the like preferably refers to the orientation of the deck and that due to movement of the ship, e.g. caused by waves, these orientation may differs from an earth bound co-ordinate system. With the foundation structure being upright, the upending device can be configured to provide support during vertical lowering within the recess 6 of the foundation structure 2 to said position at sea for installation.

By this, the foundation structure is manoeuvred and lowered within the boundaries of the recess.

Preferably, the upending and lowering of the foundation structure 2 are processes executed subsequently to each other, in the sense that during the upending the position of the foundation structure relatively to the upending device 9 is maintained substantially fixed, and when the upending device 9 has positioned the foundation structure 2 in a vertical position ready for being lowered, the position of the upending device 9 is maintained and the foundation structure 2 is lowered vertically downwardly.

In particular preferred embodiments, the recess is arranged at the center line of the vessel, said recess is preferably symmetrical around the center line and preferably symmetrically arranged at the center line.

While the shaping and dimension of the recess 6 may be made in accordance with the dimensioning and shaping of the foundation structure, non-limiting examples of such dimensioning may be: a recess has a width and a length, wherein the length is larger than half the width, and wherein the length preferably is at least 1/20^{th} , such as at least 1/10^{th} and smaller than 1/5^{th} of the design water line of the vessel, and wherein the width preferably is larger than 10 meters, such as larger than 15 meters., and preferably smaller than 35 meters

In order to maintain the foundation structure in desired position in the upending device 9, the upending device 9 may comprise a constraining element for receiving an end of said foundation structure

In some preferred embodiments, the upending device 9 comprising a cradle 15 configured to receive the foundation structure 2.

To provide for the rotation of the upending device, the upending device 9 may be hingedly mounted to the vessel to rotate the upending device about said horizontal rotational axis.

In preferred embodiments, the upending device 9 is hingedly mounted at two positions 18a, 18b (see e.g. fig. 1B) and wherein said horizontal axis extends in-between said two positions 18a, 18b. Preferably, the two positions are both elevated relatively to the recess 6 with one position on either side of the centerline, preferably on either side of the recess 6.

The vessel preferably also comprises one or more actuators, such as hydraulic actuator(s), pneumatic actuator(s) and/or electrical actuator(s), connected to the upending device to provide or assist said rotation of the upending device upon activation of the actuators.

In preferred embodiments, the upending device comprising one or more activatable gripping elements 19 which upon activation provides a force directed inwardly to provide a grip on the foundation structure. This force will at least assist in maintaining the foundation structure in a desired position in the upending device. As perhaps most clearly visible by the differences between fig. 1A and fig. 1B, the gripping elements 19 may comprise two curved elements 19a hinged individually to a further curved element 19b attached to the upending device. The two hinged sections 19a can be positioned in a position as shown in fig. 1A for receiving a foundation structure 2 and in a closed position as shown in fig. 1B where the two curved elements 19a in combination with the further curved element 19b defines a tubular structure encircling the perimeter of the foundation structure 2. As illustrated, the further curved element 19b and the gripping elements 19a rotates with the upending device. Flexible elements (not shown) may be provided in-between the inside of the gripping elements 19a and the further curved element 19b and the outside of the foundation structure 2 to provide a flexible gripping on the foundation structure 2. Such flexible elements may also allow for longitudinal movement of the foundation structure 2.

In preferred embodiments, the upending device comprising one or more activatable stopping elements 20 (see e.g. fig. 1B) which upon activation acts as an abutment member for an end of the foundation structure 2 to prevent the foundation structure to proceed beyond the stopping element(s) 20. In the embodiment shown in fig. 1, the stopping element 20 may be characterized as a claw like element. In the disclosed embodiment, the stopping element 20 comprising two parallel beams 20a connected at their ends by a cross member 20b. Opposite to the cross member 20b, the beams 20a are rotatably mounted to allow rotation of the stopping element 20. As perhaps most clearly identified by comparing the differences between figs. 1B and 1C, the stopping element 20 rotates between a stopping position (fig. 1B) where the end of foundation structure 2 abuts the cross member 20b, and a non-stopping position (fig. 1C) where the cross member 20b is position outside the foundation structure. During upending of the foundation structure 2 to vertical position, the stopping element 20 is positioned in the stopping position, and during lowering of the foundation structure 2, the stopping element is positioned in the non-stopping position.

The vessel further comprises a crane 13. Such a crane is configured to hoist said foundation structure 2 from a deck position to the upending device 9 with an end of the foundation structure received by the upending device 9 (as illustrated in fig. 1B). Thereafter, the crane 13 connects to the foundation structure and provides an upwardly directed pull in the foundation structure 2 at position between the rotational axis and an end of the foundation structure being opposite to the end received and gripped by the upending device 9.

In preferred embodiments, the vessel comprises a rack 16 configured to store a plurality of foundation structures axially aligned with the centerline 12 of the vessel. Preferably, the rack 16 is arranged on the deck of the vessel preferably displayed to one side of the vessel.

As illustrated in fig. 1A such a rack 16 may comprise a number of uprights 21 attached to the deck. The uprights 21 are in the direction transversal to the longitudinal direction of the vessel arranged with a distance matching the external dimension of the foundation structures, The height of the uprights 21 is typically selected to match the total height of the number of foundation structures to be stored in the height direction. In the embodiment shown in fig. 1, two foundation structures 2 are stored in the height direction and three in the transversal direction, that is in total six foundation structures 2 stored in the rack.

A rest (not illustrated) is arranged in between transversal neighbouring uprights to receive a section of a foundation structure 2. Such a rest typically mimic the outer shape of the foundation structure 2. In case of cylindrical foundation structures 2 the rest preferably has a cross section of a semi-circle. Such rests are typically mounted in between transversal neighbouring uprights so that a clearance is provide between foundation structures placed above each other, and so that bottom sides of the foundation structure are supported by the rests. Although it may be preferred that all rest are movable arranged, the lower most rest may be fixedly arranged, and the remaining rests in between two foundation structures 2 being removable arranged to allow access to all the foundation structures 2.

Fastening devices, such as straps, may be used to fastening the foundation structures in the rack 16

The uprights 21 are in the longitudinal direction spaced apart preferably with a distance so that the ends of the foundation structures 2 protrude beyond the outer most (in longitudinal direction) uprights 21. The uprights 21 may be moveable arranged to the deck to allow for adjusting the distance between neighbouring uprights 21 in transversal direction, thereby allowing the rack 16 to be set to store foundation structures of different sizes, and/or to allow for adjusting the distance between neighbouring uprights 21 in the longitudinal direction, thereby allowing the rack to store foundation structures 2 with different lengths.

A rack 16 may also be used to store a plurality of foundation structures 2 in an upright orientation as illustrated in fig. 1A wherein the foundation structures are referenced by 2', to indicate that these foundation structures 2' each being shorter than the other foundation structures 2 and stored in a upright orientation. Such a foundation structure 2' may be a transition piece to be installed on top of a foundation structure 2 being a monopile and serving as a base for further installation of a wind turbine. Alternatively to or in combination with using a rack for storage, the shorter foundation structures 2' may be bolted to the deck of the vessel although other fastenings may be used. It is furthermore noted, that the invention is not considered limited to storing shorter foundation structures 2' in upright position as they may be stored horizontally as the longer foundation structures 2.

A vessel according to any one of the preceding claims further comprising hammer tool 17 configured to ram a foundation structure 2 into the seabed. Such a hammer tool 17 may preferably be carried by the crane.

The invention also relates to method of installing a foundation structure 2, such as a monopile, at a position at sea, the position may be a foundation extending from the seabed or may be a position in or on the seabed. The method is carried out by use of the vessel according to embodiments presented herein and comprises:
- arranging a foundation structure 2 in the upending device 9,
- rotate the upending device 9 by an amount positioning the foundation structure 2 in an upright position, and
- provide a vertical lowering within the recess 6 of the foundation structure 2 to said position at sea for installation.

Prior to provide the vertical lowering within the recess 6 of the foundation structure 2, the stopping element 20, the gripping elements 19 and/or other elements preventing a longitudinal movement of the foundation structure within the upending device 9 is/are released and the crane 13 will carry the weight of the foundation structure 2 and controlling the vertical lowering of the foundation structure 2. When a hammer tool 17 is used to ram the foundation structure 2 into the seabed, the crane 13 is preferably operated not to impair the ramming although controlling the vertical orientation of the foundation structure 2.

### List of reference symbols used:

- 1: Vessel
- 2: Foundation structure
- 3: Hull
- 4: Stern
- 5: Aft
- 6: Recess
- 7: Bow
- 8: Opening
- 9: Upending device
- 12: Center line
- 13: Crane
- 14: Rotational axis
- 15: Cradle
- 16: Rack
- 17: Hammer tool
- 18a, 18b: Hinge positions
- 19: Gripping elements
- 19a: Curved element
- 19b: Further curved element
- 20: Stopping element
- 20a: Beam of stopping element
- 20b: Cross member of stopping element
- 21: Upright
- 22: Wave propagation direction

## Claims

1. A vessel (1) configured to install a foundation structure (2), such as a monopile, at a position at sea, the position is a foundation extending from the seabed or is a position in or on the seabed, the foundation structure comprising an elongate element, the vessel comprising:
• a hull (3) having a stern (4) at the aft (5) of the vessel (1), wherein the stern is provided with a recess (6) extending from the stern and towards a bow (7) of the vessel (1), the recess provides an opening (8) going through the hull (3) allowing sea access from a deck position,
• an upending device (9) arranged at the recess (6), said upending device (9) being configured to
∘ receive at least a section of said foundation structure (2) being positioned substantially horizontally and axially aligned with the center line (12) of the vessel, and
∘ rotate about a horizontal rotational axis (14) being substantially perpendicular to the center line (12) of the vessel so that upon rotating, an end of the foundation structure is positioned in the recess (6) and with the foundation structure (2) in an upright position,
∘ provide a vertical lowering within the recess (6) of the foundation structure (2) to said position at sea for installation, **characterised in that** the vessel further comprising:
∘ a swivelling jib boom crane (13) being configured to
o hoist said foundation structure (2) from a deck position to the upending device (9) with an end of the foundation structure received by the upending device (9), and subsequently
o providing an upwardly directed pull in the foundation structure (2) at position between the rotational axis and an end of the foundation structure being opposite to the end received and gripped by the upending device (9).

2. A vessel according to claim 1, wherein the recess is arranged at the center line of the vessel, said recess is preferably symmetrical around the center line and preferably symmetrically arranged at the center line.

3. A vessel according to claim 1 or 2, wherein the recess has a width and a length, wherein the length is larger than half the width, and wherein the length preferably is at least 1/20^{th}, such as at least 1/10^{th} and smaller than 1/5^{th} of the design water line of the vessel, and wherein the width preferably is larger than 10 meters, such as larger than 15 meters., and preferably smaller than 35 meters

4. A vessel according to any one of claims 1-3, wherein the upending device (9) comprising a constraining element for receiving said end of said foundation structure.

5. A vessel according to any one of claims 1-3, wherein the upending device (9) comprising a cradle (15) configured to receive the foundation structure (2).

6. A vessel according to any one of the preceding claims, wherein the upending device (9) is hingedly mounted to the vessel to rotate the upending device about said horizontal rotational axis.

7. A vessel according to claim 6, wherein the upending device (9) is hingedly mounted at two positions (18a, 18b) and wherein said horizontal axis extends in-between said two positions (18a, 18b), said two positions are both elevated relatively to the recess (6) with one position on either side of the centerline, preferably on either side of the recess (6).

8. A vessel according to any one of the preceding claims, wherein the upending device comprising one or more activatable stopping elements (20) which upon activation acts as an abutment member for an end of the foundation structure (2) to prevent the foundation structure to proceed beyond the stopping element(s) (20).

9. A vessel according to any one of the preceding claims, wherein the vessel comprising a rack (16) configured to store a plurality of foundation structures axially aligned with the centerline (12) of the vessel.

10. A vessel according to claim 9, wherein the rack (16) is arranged on the deck of the vessel preferably displayed to one side of the vessel.

11. A vessel according to any one of the preceding claims further comprising hammer tool (17) configured to ram a foundation structure (2) into the seabed.

12. A vessel according to any one of the preceding claims further comprising one or more propulsion devices configured to manoeuvre the vessel between different locations and/or maintain the vessel in a designated location for installation of said foundation structure (2),

13. A vessel according to claim 12, wherein one or more of said one or more propulsion devices is configured to automated maintaining the vessel in a designated location based on one or more position reference sensors, and/or wherein the vessel is configured to maintain the vessel in a designated location passively by anchoring the vessel to the seabed as said designated position.

14. A method of installing a foundation structure (2), such as a monopile, at a position at sea, the position may be a foundation extending from the seabed or may be a position in or on the seabed, the method is carried out by use of the vessel according to any one of the preceding claims and comprising:
• arranging a foundation structure (2) in the upending device (9),
• rotate the upending device (9) by an amount positioning the foundation structure (2) in an upright position, and
• provide a vertical lowering within the recess (6) of the foundation structure (2) to said position at sea for installation.

15. A method according to claim 14, further comprising
prior to install said foundation structure:
• manoeuvre said vessel to an installation position,
• determine an orientation of wave propagation direction at said installation position,
• orientating the vessel at an orientation being selected between an orientation where a bow of said vessel substantially facing incoming waves head-on and an orientation where a centre line of the vessel being substantially parallel with the waves, and
during install of said foundation structure:
• maintaining said vessel at the installation position and at said orientation.

## Patentansprüche

1. Schiff (1), konfiguriert zum Installieren einer Fundamentstruktur (2), wie einen Monopile, an einer Position auf See, wobei die Position ein Fundament ist, das sich vom Meeresboden erstreckt, oder eine Position in oder auf dem Meeresboden ist, wobei die Fundamentstruktur ein längliches Element umfasst, wobei das Schiff Folgendes umfasst:
• einen Rumpf (3), aufweisend ein Heck (4) am Achterschiff (5) des Schiffes (1), wobei das Heck mit einer Aussparung (6) bereitgestellt ist, die sich vom Heck in Richtung eines Bugs (7) des Schiffes (1) erstreckt, wobei die Aussparung eine Öffnung (8) bereitstellt, die durch den Rumpf (3) hindurchgeht und den Meerzugang von einer Decksposition aus erlaubt,
• eine Aufrichtvorrichtung (9), angeordnet an der Aussparung (6), wobei die Aufrichtvorrichtung (9) konfiguriert ist zum
∘ Aufnehmen mindestens einer Sektion der Fundamentstruktur (2), die im Wesentlichen horizontal positioniert und axial auf die Mittellinie (12) des Schiffes ausgerichtet ist, und
∘ Drehen um eine horizontale Drehachse (14), die im Wesentlichen senkrecht zur Mittellinie (12) des Schiffes ist, so dass beim Drehen ein Ende der Fundamentstruktur in der Aussparung (6) positioniert ist und die Fundamentstruktur (2) sich in einer aufrechten Position befindet,
∘ Bereitstellen eines vertikalen Absenkens innerhalb der Aussparung (6) der Fundamentstruktur (2) zu der Position auf See zur Installation, **dadurch gekennzeichnet, dass** das Schiff weiter Folgendes umfasst:
∘ einen Schwenkauslegerkran (13), der konfiguriert ist zum
∘ Heben der Fundamentstruktur (2) von einer Decksposition zu der Aufrichtvorrichtung (9) mit einem Ende der Fundamentstruktur von der Aufrichtvorrichtung (9) aufgenommen, und anschließend
∘ Bereitstellen eines nach oben gerichteten Zugs in der Fundamentstruktur (2) an einer Position zwischen der Drehachse und einem Ende der Fundamentstruktur, das dem von der Aufrichtvorrichtung (9) aufgenommenen und ergriffenen Ende gegenüberliegt.

2. Schiff nach Anspruch 1, wobei die Aussparung an der Mittellinie des Schiffes angeordnet ist, wobei die Aussparung vorzugsweise symmetrisch um die Mittellinie herum ist und vorzugsweise symmetrisch an der Mittellinie angeordnet ist.

3. Schiff nach Anspruch 1 oder 2, wobei die Aussparung eine Breite und eine Länge aufweist, wobei die Länge größer ist die Hälfte der Breite, und wobei die Länge vorzugsweise mindestens 1/20, wie mindestens 1/10 und kleiner als 1/5 der Auslegungswasserlinie des Schiffes ist, und wobei die Breite vorzugsweise größer als 10 Meter, wie größer als 15 Meter, und vorzugsweise kleiner als 35 Meter ist.

4. Schiff nach einem der Ansprüche 1 - 3, wobei die Aufrichtvorrichtung (9) ein Zwangselement zum Aufnehmen des Endes der Fundamentstruktur umfasst.

5. Schiff nach einem der Ansprüche 1 - 3, wobei die Aufrichtvorrichtung (9) eine Wiege (15) umfasst, die konfiguriert ist, um die Fundamentstruktur (2) aufzunehmen.

6. Schiff nach einem der vorstehenden Ansprüche, wobei die Aufrichtvorrichtung (9) angelenkt an dem Schiff montiert ist, um die Aufrichtvorrichtung um die horizontale Drehachse zu drehen.

7. Schiff nach Anspruch 6, wobei die Aufrichtvorrichtung (9) an zwei Positionen (18a, 18b) angelenkt montiert ist und wobei sich die horizontale Achse zwischen den zwei Positionen (18a, 18b) erstreckt, wobei die zwei Positionen beide relativ zu der Aussparung (6) erhöht sind mit einer Position auf jeder Seite der Mittellinie, vorzugsweise auf jeder Seite der Aussparung (6).

8. Schiff nach einem der vorstehenden Ansprüche, wobei die Aufrichtvorrichtung ein oder mehrere aktivierbare Stoppelemente (20) umfasst, die bei Aktivierung als Anschlagelement für ein Ende der Fundamentstruktur (2) wirken, um zu verhindern, dass die Fundamentstruktur über das (die) Stoppelement(e) (20) hinausgeht.

9. Schiff nach einem der vorstehenden Ansprüche, wobei der Schiff ein Gestell (16) umfasst, das konfiguriert ist, um eine Vielzahl von Fundamentstrukturen zu lagern, die axial auf die Mittellinie (12) des Schiffes ausgerichtet sind.

10. Schiff nach Anspruch 9, wobei das Gestell (16) auf dem Deck des Schiffes angeordnet ist, vorzugsweise angezeigt an einer Seite des Schiffes.

11. Schiff nach einem der vorstehenden Ansprüche, weiter umfassend ein Hammerwerkzeug (17), das konfiguriert ist, um eine Fundamentstruktur (2) in den Meeresboden zu rammen.

12. Schiff nach einem der vorstehenden Ansprüche, weiter umfassend eine oder mehrere Vortriebsvorrichtungen, die konfiguriert sind, um das Schiff zwischen verschiedenen Standorten zu manövrieren und/oder das Schiff an einem designierten Standort zur Installation der Fundamentstruktur (2) zu halten.

13. Schiff nach Anspruch 12, wobei eine oder mehrere der einen oder mehreren Vortriebsvorrichtungen konfiguriert sind, um das Schiff basierend auf einem oder mehreren Positionsreferenzsensoren automatisch an einem designierten Standort zu halten, und/oder wobei das Schiff konfiguriert ist, um das Schiff passiv durch Verankern des Schiffes am Meeresboden als dem designierten Standort zu halten.

14. Verfahren zum Installieren einer Fundamentstruktur (2), wie eines Monopiles, an einer Position auf See, wobei die Position ein Fundament sein kann, das sich von dem Meeresboden erstreckt, oder eine Position im oder auf dem Meeresboden sein kann, wobei das Verfahren unter Verwendung des Schiffes nach einem der vorstehenden Ansprüche durchgeführt wird und Folgendes umfasst:
• Anordnen einer Fundamentstruktur (2) in der Aufrichtvorrichtung (9),
• Drehen der Aufrichtvorrichtung (9) um einen Betrag, der die Fundamentstruktur (2) in eine aufrechte Position positioniert, und
• Bereitstellen einer vertikalen Absenkung innerhalb der Aussparung (6) der Fundamentstruktur (2) in die genannte Position auf See zur Installation.

15. Verfahren nach Anspruch 14, weiter umfassend
vor dem Installieren der Fundamentstruktur:
• Manövrieren des Schiffes in eine Installationsposition,
• Bestimmen einer Orientierung der Wellenausbreitungsrichtung an der Installationsposition,
• Orientieren des Schiffes in einer Orientierung, die zwischen einer Orientierung, bei der ein Bug des Schiffes im Wesentlichen frontal auf ankommende Wellen gerichtet ist, und einer Orientierung, bei der eine Mittellinie des Schiffes im Wesentlichen parallel zu den Wellen verläuft, ausgewählt wird, und
während des Installierens der Fundamentstruktur:
• Halten des Schiffes an der Installationsposition und der Orientierung.

## Revendications

1. **Navire** (1) conçu pour installer une structure de fondation (2), telle qu'un monopieu, en une position en mer, la position étant une fondation s'étendant depuis le fond marin ou étant une position dans ou sur le fond marin, la structure de fondation comprenant un élément allongé, le navire comprenant :
• une coque (3) comportant une poupe (4) à l'arrière (5) du navire (1), la poupe étant dotée d'une échancrure (6) s'étendant depuis la poupe et vers une proue (7) du navire (1), l'échancrure fournissant une ouverture (8) traversant la coque (3), permettant l'accès à la mer depuis une position sur le pont,
• un dispositif de redressement (9) disposé au niveau de l'échancrure (6), ledit dispositif de redressement (9) étant conçu pour
∘ recevoir au moins une partie de ladite structure de fondation (2), qui est positionnée sensiblement horizontalement et alignée axialement avec l'axe longitudinal (12) du navire, et
∘ tourner autour d'un axe de rotation horizontal (14) qui est sensiblement perpendiculaire à l'axe longitudinal (12) du navire de sorte que, lors de la rotation, une extrémité de la structure de fondation est positionnée dans l'échancrure (6) et la structure de fondation (2) se trouve en une position dressée,
∘ produire une descente verticale de la structure de fondation (2) à l'intérieur de l'échancrure (6) jusqu'à ladite position en mer pour l'installation, **caractérisé en ce que** le navire comprend en outre :
∘ une grue à flèche orientable (13) qui est conçue pour
∘ soulever ladite structure de fondation (2) depuis une position sur le pont jusqu'au dispositif de redressement (9), une extrémité de la structure de fondation étant reçue par le dispositif de redressement (9), et ensuite
∘ exercer une traction dirigée vers le haut sur la structure de fondation (2) en une position entre l'axe de rotation et une extrémité de la structure de fondation qui est opposée à l'extrémité reçue et saisie par le dispositif de redressement (9).

2. Navire selon la revendication 1, dans lequel l'échancrure est disposée sur l'axe longitudinal du navire, ladite échancrure étant de préférence symétrique autour de l'axe longitudinal et de préférence disposée symétriquement par rapport à l'axe longitudinal.

3. Navire selon la revendication 1 ou 2, dans lequel l'échancrure a une largeur et une longueur, la longueur étant supérieure à la moitié de la largeur, et la longueur étant de préférence d'au moins 1/20^{e}, par exemple d'au moins 1/10^{e} et inférieure à 1/5^{e} de la ligne de flottaison de calcul du navire, et la largeur étant de préférence supérieure à 10 mètres, par exemple supérieure à 15 mètres, et de préférence inférieure à 35 mètres.

4. Navire selon l'une quelconque des revendications 1-3, dans lequel le dispositif de redressement (9) comprend un élément de contrainte destiné à recevoir ladite extrémité de ladite structure de fondation.

5. Navire selon l'une quelconque des revendications 1-3, dans lequel le dispositif de redressement (9) comprend un berceau (15) conçu pour recevoir la structure de fondation (2).

6. Navire selon l'une quelconque des revendications précédentes, dans lequel le dispositif de redressement (9) est monté de manière articulée sur le navire pour permettre la rotation du dispositif de redressement autour dudit axe de rotation horizontal.

7. Navire selon la revendication 6, dans lequel le dispositif de redressement (9) est monté de manière articulée en deux positions (18a, 18b) et dans lequel ledit axe horizontal s'étend entre lesdites deux positions (18a, 18b), lesdites deux positions sont l'une et l'autre surélevées par rapport à l'échancrure (6), une position se trouvant de chaque côté de l'axe longitudinal, de préférence de chaque côté de l'échancrure (6).

8. Navire selon l'une quelconque des revendications précédentes, dans lequel le dispositif de redressement comprend un ou plusieurs éléments d'arrêt activables (20) qui, lors de l'activation, servent d'élément de butée pour une extrémité de la structure de fondation (2) afin d'empêcher la structure de fondation de progresser au-delà de l'élément/des éléments d'arrêt (20).

9. Navire selon l'une quelconque des revendications précédentes, le navire comprenant un râtelier (16) conçu pour stocker une pluralité de structures de fondation alignées axialement avec l'axe longitudinal (12) du navire.

10. Navire selon la revendication 9, dans lequel le râtelier (16) est disposé sur le pont du navire, de préférence placé sur un côté du navire.

11. Navire selon l'une quelconque des revendications précédentes, comprenant en outre un marteau (17) conçu pour enfoncer une structure de fondation (2) dans le fond marin.

12. Navire selon l'une quelconque des revendications précédentes, comprenant en outre un ou plusieurs dispositifs de propulsion conçus pour manœuvrer le navire entre différents sites et/ou maintenir le navire en un site désigné pour l'installation de ladite structure de fondation (2),

13. Navire selon la revendication 12, dans lequel un ou plusieurs desdits un ou plusieurs dispositifs de propulsion est/sont conçu(s) pour le maintien automatisé du navire sur un site désigné, sur la base d'un ou de plusieurs capteurs de référence de position, et/ou dans lequel le navire est conçu pour le maintien passif du navire sur un site désigné, par ancrage du navire au fond marin en ladite position désignée.

14. Procédé pour installer une structure de fondation (2), telle qu'un monopieu, en une position en mer, la position pouvant être une fondation s'étendant à partir du fond marin ou pouvant être une position dans ou sur le fond marin, le procédé étant mis en œuvre à l'aide du navire selon l'une quelconque des revendications précédentes et comprenant les étapes consistant à :
• disposer une structure de fondation (2) dans le dispositif de redressement (9),
• faire tourner le dispositif de redressement (9) d'une quantité positionnant la structure de fondation (2) en une position dressée, et
• procéder à une descente verticale de la structure de fondation (2) à l'intérieur de l'échancrure (6) jusqu'à ladite position en mer pour l'installation.

15. Procédé selon la revendication 14, comprenant en outre
avant l'installation de ladite structure de fondation :
• manœuvrer ledit navire jusqu'à une position d'installation,
• déterminer une orientation de la direction de propagation des vagues à ladite position d'installation,
• orienter le navire selon une orientation qui est choisie entre une orientation dans laquelle une proue dudit navire fait sensiblement face de front aux vagues qui arrivent et une orientation dans laquelle un axe longitudinal du navire est sensiblement parallèle aux vagues, et
pendant l'installation de ladite structure de fondation :
• maintenir ledit navire à la position d'installation et selon ladite orientation.
